# DEMANDE DE BREVET EUROPEEN

(11) **EP 4 650 717 A1**
(43) Date de publication de la demande: **19.11.2025**
(21) Numéro de dépôt: 25176287.8
(22) Date de dépôt: 14.05.2025
(51) Int. Cl.: G01C 23/00, B64D 45/08, G08G 5/21, G08G 5/23, G08G 5/54

(54) **SYSTÈME DE VISION AMÉLIORÉE D' AÉRONEF, MUNI D'UN SYSTÈME DE DÉTECTION D'INCOHÉRENCE ET PROCÉDÉ CORRESPONDANT**

(30) Priorité: 14.05.2024 FR 2404908
(71) Demandeur: Dassault Aviation, 75008 Paris (FR)
(72) Inventeur: MATHIEU, Clément, 33701 MERIGNAC (FR); BAUDSON, Olivier, 92552 SAINT-CLOUD CEDEX (FR)
(74) Mandataire: Lavoix

(57) **Abrégé**

Le système comporte un afficheur (36), et un système de détection d'incohérence entre une position affichée d'une représentation synthétique (41) et la position réelle sur l'afficheur (36) d'une piste d'atterrissage (13) et/ou d'une rampe d'approche (15).

Le système de détection d'incohérence comprend :
- un module d'identification d'une ligne de lampes (17) s'étendant transversalement à la piste d'atterrissage (13) ;
- un système de caractérisation de la ligne de lampes (17) identifiée pour déterminer une position déterminée de la ligne de lampes (17) par rapport à la piste d'atterrissage (13) parmi une pluralité de positions possibles s'étendant transversalement à la piste d'atterrissage (13),
- un module de calcul configuré pour calculer une position réelle sur l'afficheur (36) de la piste d'atterrissage (13) et/ou de la rampe d'approche (15) en utilisant la position déterminée de la ligne de lampes (17).

## Description

La présente invention concerne un système de vision améliorée d'aéronef, comportant :
- un afficheur, destiné à visualiser l'espace situé à l'avant de l'aéronef et un générateur d'affichage sur l'afficheur, configuré pour afficher sur l'afficheur une représentation synthétique de positionnement d'une piste d'atterrissage et/ou d'une rampe d'approche vers la piste d'atterrissage à une position affichée de la piste d'atterrissage et/ou de la rampe d'approche ;
- un système de détection d'incohérence entre la position affichée de la représentation synthétique et la position réelle de vision sur l'afficheur de la piste d'atterrissage et/ou de la rampe d'approche.

Un tel système est destiné à être implanté dans le cockpit d'un aéronef pour être associé à un afficheur du cockpit. L'afficheur est par exemple un afficheur au moins partiellement transparent, tel qu'un écran semi-transparent placé devant un pare-brise du cockpit, un système de projection d'images sur le pare-brise du cockpit, un pare-soleil semi-transparent, un viseur de casque, une lunette semi-transparente proche de l'oeil. En variante, l'afficheur constitue un écran tête basse intégré dans le tableau de bord du cockpit.

Le cockpit est par exemple présent dans l'aéronef, comme dans le cas d'un avion d'affaires ou d'un avion de ligne, ou est une salle de contrôle située à distance de l'aéronef, comme dans le cas d'un drone.

Le système d'affichage est destiné à faciliter le pilotage de l'aéronef lors d'un atterrissage dans des conditions de visibilité faible ou nulle.

Dans de telles conditions, des systèmes de guidage permettent au pilote d'approcher au plus près de la piste d'atterrissage. Néanmoins, l'atterrissage n'est possible que lorsque le pilote voit effectivement la piste.

Dans tous les cas, en fin d'approche, le pilote cherche visuellement à repérer la position de la piste d'atterrissage, afin de prendre la décision d'atterrir, ou au contraire d'effectuer une manoeuvre de remise des gaz.

Pour faciliter le pilotage de l'aéronef, et donner au pilote une indication globale sur la structure du terrain situé en regard de l'aéronef, il est connu de générer des images synthétiques du paysage situé à l'avant de l'aéronef, à partir notamment de bases de données topographiques, en fonction de la position courante de l'aéronef déterminée par le système de navigation de l'aéronef.

Les images synthétiques sont représentatives de l'environnement situé à l'avant de l'appareil, tel qu'il peut être observé à travers le pare-brise par un pilote dans le cockpit.

Ces images synthétiques comprennent dans certains cas un marquage synthétique de la piste d'atterrissage à la position où elle est supposée se trouver.

Un tel système de vision permet au pilote de se représenter où se situe la piste.

De tels systèmes de vision fournissent une aide substantielle au pilote, mais s'avèrent parfois imprécis, compte tenu des erreurs possibles dans le positionnement de l'aéronef, et/ou dans les données topographiques disponibles dans les bases de données.

Il est donc nécessaire de disposer en parallèle d'une vision réelle de l'environnement se situant à l'extérieur de l'aéronef.

Pour faciliter le repérage du seuil de piste en conditions de visibilité faible, la plupart des aérodromes sont équipés de rampes lumineuses d'approche, situées longitudinalement à l'avant du seuil de piste.

Ces rampes comprennent généralement au moins une ligne longitudinale de lampes alignées suivant l'axe de piste, et perpendiculairement à la ligne longitudinale, au moins une ligne transversale de lampes croisant la ligne longitudinale.

Pour faciliter le repérage de la rampe d'approche, des systèmes de vision améliorée (« Enhanced Vision Systems ou « EVS » en anglais) ont été développés.

Ces systèmes comprennent généralement une caméra embarquée dans le nez de l'aéronef. La caméra, qui comporte par exemple des capteurs fonctionnant dans plusieurs bandes de longueurs d'ondes, améliore la visibilité à l'avant de l'aéronef, en détectant le terrain et toutes les structures présentes sur le terrain comme par exemple des lumières présentes sur la piste ou autour de la piste, en particulier les éclairages des rampes d'approche.

Sur la base des images collectées par la caméra, une image réelle de l'environnement présent à l'avant de l'aéronef est obtenue.

De tels systèmes de vision permettent donc de confirmer la position de la piste par rapport à l'aéronef et/ou par rapport à l'environnement, et facilitent la prise de décision par le pilote à l'altitude de décision, à laquelle il doit décider de poursuivre ou non l'atterrissage.

Dans certains cas où la visibilité est très basse, et en dessous de la valeur requise pour effectuer l'approche sans système de vision, un système de vision améliorée peut être utilisé sous la hauteur de décision, afin de permettre de sécuriser la trajectoire vers la piste d'atterrissage.

Dans ce cas, le pilote doit s'assurer, avant d'utiliser le marquage synthétique représentant la piste sur l'afficheur du système de vision améliorée, que la position du marquage sur l'afficheur est bien fiable et correspond à la position réelle où la piste va apparaitre.

Un test de cohérence doit donc être effectué par le pilote. Ce test de cohérence assure que la trajectoire suivie par l'aéronef entre la hauteur de décision et le toucher au niveau du sol est correcte.

À cet égard, le pilote doit essayer notamment de repérer la position réelle des lampes de la rampe d'approche dans l'image produite par l'afficheur pour s'assurer que leur position est cohérente avec le marquage synthétique de la piste. En variante, il doit comparer la position réelle des lampes de seuil de piste dans l'image qu'il observe sur l'afficheur, avec le marquage synthétique de seuil de piste indiqué par le système de vision améliorée. Une telle tâche est un élément essentiel de la prise de décision d'atterrissage, qui doit intervenir très rapidement, en quelques secondes. Elle repose sur le seul jugement visuel du pilote.

Dans certains cas, une panne peut se produire sur un système de localisation de l'aéronef conduisant à un écart entre la position du marquage synthétique de la piste sur l'écran obtenue à partir du système de localisation, et la position réelle de la piste. Il existe alors un risque que le pilote pose l'aéronef avant le seuil de piste, si les indications données par le capteur de position ne sont pas exactes.

Un but de l'invention est donc d'améliorer la fiabilité d'un système de vision améliorée, afin de permettre des approches par très basse visibilité, notamment des visibilités inférieures à celles requises pour effectuer l'approche sans système de vision augmentée, notamment entre la hauteur de décision et le sol.

À cet effet, l'invention a pour objet un système du type précité, caractérisé en ce que le système de détection d'incohérence comprend ;
- un premier module d'identification, dans une image optique de l'espace situé à l'avant de l'aéronef, d'au moins d'une ligne de lampes s'étendant transversalement à un axe de la piste d'atterrissage ;
- un système de caractérisation de la ligne de lampes identifiée à partir du premier module d'identification, le système de caractérisation étant configuré pour déterminer une position déterminée de la ligne de lampes par rapport à la piste d'atterrissage parmi une pluralité de positions possibles de lignes de lampes s'étendant transversalement à un axe de la piste d'atterrissage ;
- un module de calcul configuré pour calculer une position réelle sur l'afficheur de la piste d'atterrissage et/ou de la rampe d'approche en utilisant la position déterminée de la ligne de lampes.

Le système selon l'invention peut comprendre l'une ou plusieurs des caractéristiques suivantes, prise(s) isolément ou suivant toute combinaison techniquement possible :
- la position déterminée de la ligne de lampes est une position géographique déterminée de la ligne de lampes ;
- le système comprend une base de signatures contenant des signatures connues de référence correspondant à des lignes transversales de lampes se retrouvant sur divers types de rampes d'approches connues ;
- chaque signature ou combinaison de signatures de référence dans la base de signatures étant associée à une distance de seuil de piste ou à nombre limité de distances possibles du seuil de piste ;
- l'ensemble de génération d'affichage sur l'afficheur est raccordé à un système de capteurs de mesure de paramètres avion et de positionnement spatial de l'aéronef ;
- le générateur d'affichage est configuré pour afficher la représentation synthétique de positionnement de la piste d'atterrissage et/ou de la rampe d'approche à la position affichée sur l'afficheur, en fonction de la position de l'aéronef déterminée par un capteur de position de l'aéronef, en particulier par un capteur GPS ou/et par une centrale inertielle ;
- le générateur d'affichage est configuré pour afficher, sur l'afficheur, l'image optique de l'espace situé à l'avant de l'aéronef, et à afficher en superposition, la représentation synthétique de positionnement de la piste d'atterrissage et/ou de la rampe d'approche vers la piste ;
- le système de caractérisation de la ligne de lampes comprend un module de comptage de lampes, sur la ligne de lampes pour définir au moins une signature de la ligne de lampes ; et un module de comparaison de la ou de chaque signature de la ligne de lampes avec des signatures connues de lignes de lampes dans une base de données de signatures connues de lignes de lampes, pour identifier au moins une signature connue correspondant à la ou à chaque signature définie par le module de comptage de lampes, le système de caractérisation de la ligne de lampes étant configuré pour déterminer la position déterminée de la ligne de lampes en utilisant la ou chaque signature connue identifiée par le module de comparaison ;
- le module de comptage de lampes est configuré pour définir au moins une signature transversale de la ligne de lampes ;
- le système de détection d'incohérence comporte un deuxième module d'identification, dans l'image optique, d'un alignement de lampes s'étendant suivant l'axe de la piste d'atterrissage, le module de comptage de lampes étant configuré pour compter sur la ligne de lampes, le nombre de lampes de part et d'autre de l'alignement, et dans l'alignement pour définir au moins une signature de la ligne de lampes ;
- la signature transversale comporte un nombre de lampes sur l'alignement au niveau de la ligne de lampes, et des nombres de lampes détectées de part et d'autre de l'alignement sur la ligne de lampes ;
- le module de comptage de lampes est configuré pour définir au moins une signature axiale de la ligne de lampes ;
- la signature axiale comprend le nombre de lampes sur l'alignement au niveau de la ligne de lampes et au moins un nombre de lampes sur au moins une ligne de lampes adjacente axialement à la ligne de lampes ;
- le module de calcul est configuré pour calculer un angle de roulis de l'aéronef, sur la base d'une orientation axiale détectée de l'alignement détecté par le module d'identification d'un alignement de lampes s'étendant suivant l'axe de la piste d'atterrissage ;
- le premier module d'identification est configuré pour identifier une couleur ou/et une intermittence périodique d'allumage d'au moins une lampe de la ligne de lampes, la signature de la ligne de lampe comportant au moins la couleur et ou une caractéristique d'intermittence d'allumage d'au moins une lampe de la ligne de rampes ;
- la ligne de lampes est une ligne transversale de rampe d'approche vers la piste d'atterrissage, la base de données étant une base de données de signatures de lignes transversales de rampes d'approche vers une piste d'atterrissage ;
- la ligne de lampes est une barre de seuil de piste, la base de données étant une base de données de signatures de barres de seuil de piste ;
- le module de comparaison est configuré pour déterminer, à partir de la signature de la ligne de lampes si la ligne de lampe est une ligne transversale de rampe d'approche vers la piste d'atterrissage ou si la ligne de lampes est une barre de seuil de piste, éventuellement décalée ;
- le système de caractérisation de la ligne de lampes identifiée à partir du premier module d'identification comporte un moteur d'intelligence artificielle configuré pour déterminer la position déterminée de la ligne de lampes par rapport à la piste d'atterrissage parmi la pluralité de positions possibles de lignes de lampes s'étendant transversalement à un axe de la piste d'atterrissage à partir d'une analyse d'une région de l'image optique comprenant la ligne de lampes ;
- le module de calcul est configuré pour déterminer une distance réelle entre la ligne de lampes et au moins une lampe adjacente à la ligne de lampes en utilisant la distance sur l'image optique entre la ligne de lampes et la lampe adjacente, et une hauteur mesurée de l'aéronef par rapport au sol ;
- le module de calcul est configuré pour supposer un écart prédéterminé de distance réelle entre la lampe adjacente à la ligne de lampes et la ligne de lampes, puis est configuré pour calculer une hauteur supposée de l'aéronef par rapport au sol en utilisant l'écart supposé entre les lampes, et à comparer la hauteur supposée de l'aéronef par rapport au sol avec la hauteur mesurée de l'aéronef par rapport au sol ;
- le système de détection d'incohérence comprend un module d'avertissement d'incohérence, configuré pour générer un signal d'avertissement lorsque la différence entre la position affichée sur l'afficheur de la représentation synthétique et la position réelle de vision sur l'afficheur de la piste d'atterrissage et/ou de la rampe d'approche calculée par le module de calcul est supérieure à un seuil donné.

L'invention a également pour objet un procédé de vision améliorée mis en œuvre dans un aéronef muni d'un système de vision améliorée tel que défini plus haut, le procédé comprenant les étapes suivantes :
- affichage sur l'afficheur par le générateur d'affichage d'une représentation synthétique de positionnement d'une piste d'atterrissage et/ou d'une rampe d'approche vers la piste d'atterrissage à une position affichée de la piste d'atterrissage et/ou de la rampe d'approche ;
- détection, par le système de détection d'incohérence d'une incohérence entre la position affichée de la représentation synthétique et la position réelle de vision sur l'afficheur de la piste d'atterrissage et/ou de la rampe d'approche ;
caractérisé en ce que la détection par le système de détection d'incohérence comprend les étapes suivantes :
- identification, par le premier module d'identification, dans une image optique de l'espace situé à l'avant de l'aéronef, d'au moins d'une ligne de lampes s'étendant transversalement à un axe de la piste d'atterrissage ;
- caractérisation, par le système de caractérisation, de la ligne de lampes identifiée à partir du premier module d'identification, pour déterminer une position déterminée de la ligne de lampes par rapport à la piste d'atterrissage parmi une pluralité de positions possibles de lignes de lampes s'étendant transversalement à un axe de la piste d'atterrissage ;
- détermination, par le module de calcul, d'une position réelle sur l'afficheur de la piste d'atterrissage et/ou de la rampe d'approche en utilisant la position déterminée de la ligne de lampes.

Le procédé selon l'invention peut comprendre l'une ou plusieurs des caractéristiques suivantes, prise(s) isolément ou suivant toute combinaison techniquement possible :
- la caractérisation de la ligne de lampes identifiée à partir du premier module d'identification comporte le comptage de lampes sur la ligne de lampes, par un module de comptage de lampes du système de caractérisation, pour définir au moins une signature de la ligne de lampes et la comparaison par le module de comparaison de la ou de chaque signature de la ligne de lampes avec des signatures connues de lignes de lampes dans une base de données de signatures connues de lignes de lampes, pour identifier au moins une signature connue correspondant à la ou à chaque signature définie par le module de comptage de lampes; le procédé comprenant la détermination, par le système de caractérisation, d'une position déterminée de la ligne de lampes utilisant la ou chaque signature connue identifiée par le module de comparaison..

L'invention sera mieux comprise à la lecture de la description qui va suivre, donnée uniquement à titre d'exemple, et faite en se référant aux dessins annexés, sur lesquels :
- [Fig.1] La figure 1 est un schéma synoptique illustrant le système de vision selon l'invention ;
- [Fig.2] La figure 2 est une vue schématique des afficheurs dans un cockpit d'un aéronef équipé du système de vision selon l'invention ;
- [Fig.3] La figure 3 est une vue simplifiée de la vision offerte au pilote à travers un afficheur du système de vision amélioré selon l'invention, dans le cas d'un positionnement cohérent du marquage synthétique de positionnement de la piste d'atterrissage ;
- [Fig.4] La figure 4 est une vue de dessus des motifs de répartition de lampes dans une rampe d'approche de type « CALVERT », propre à être approchée par un système de vision selon l'invention ;
- [Fig.5] La figure 5 est une vue d'une image obtenue à l'aide du système de vision améliorée selon l'invention, dans lequel une première détection d'un axe longitudinal et d'une ligne transversale d'une rampe d'approche est effectuée ;
- [Fig.6] La figure 6 est une vue analogue à la figure 5, illustrant les opérations de comptage des lampes d'une ligne transversale de la rampe, pour déterminer une signature transversale de la rampe ;
- [Fig.7] La figure 7 est une vue analogue à la figure 6, pour déterminer une signature axiale de la ligne transversale de lampes ;
- [Fig.8] La figure 8 illustre le principe du calcul effectué pour déterminer la distance séparant deux lignes successives de lampes sur la rampe, à partir de la distance séparant deux lignes successives de lampes sur une image obtenue par le capteur de vision selon l'invention ;
- [Fig.9] La figure 9 est une vue analogue à la figure 5, dans lequel les distances au seuil de piste ont été marquées ;
- [Fig.10] La figure 10 est une vue analogue à la figure 5, illustrant la détermination d'une signature transversale de barre de seuil de piste ;
- [Fig.11] La figure 11 est une vue analogue à la figure 3, dans le cas d'une incohérence entre la position réelle de la piste, et le marquage de localisation de la piste sur l'afficheur, détectée par le système de vision selon l'invention ; et
- [Fig.12] La figure 12 est un schéma synoptique résumant les principales étapes d'un procédé de vision améliorée selon l'invention.

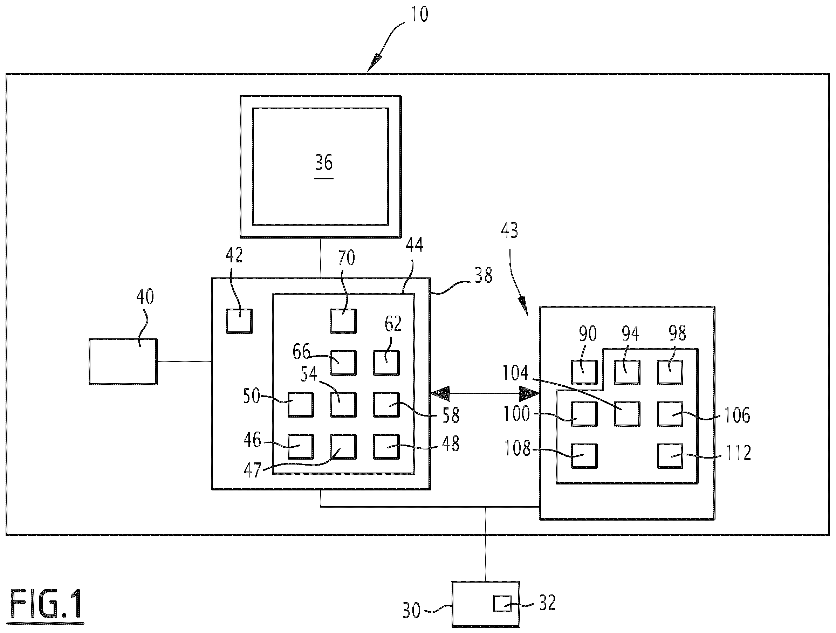

Un premier système 10 de vision améliorée selon l'invention est illustré schématiquement par la figure 1.

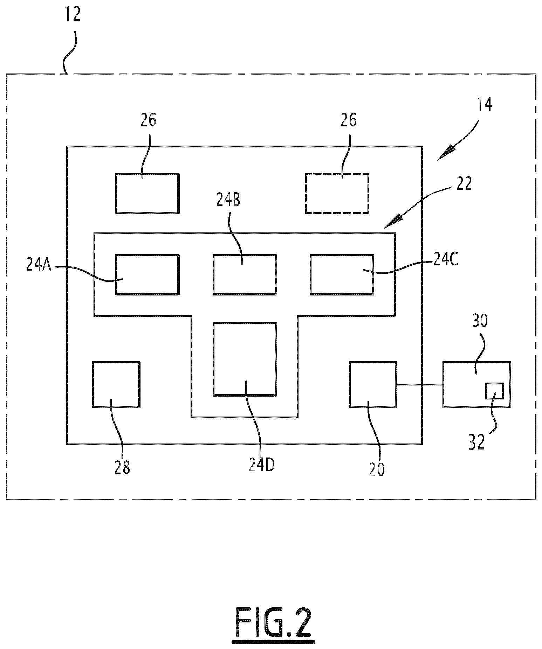

Ce système de vision 10 est destiné à être installé dans un aéronef 12, visible schématiquement sur la figure 2, pour permettre l'affichage d'informations sur un afficheur présent dans le cockpit 14 de l'aéronef 12.

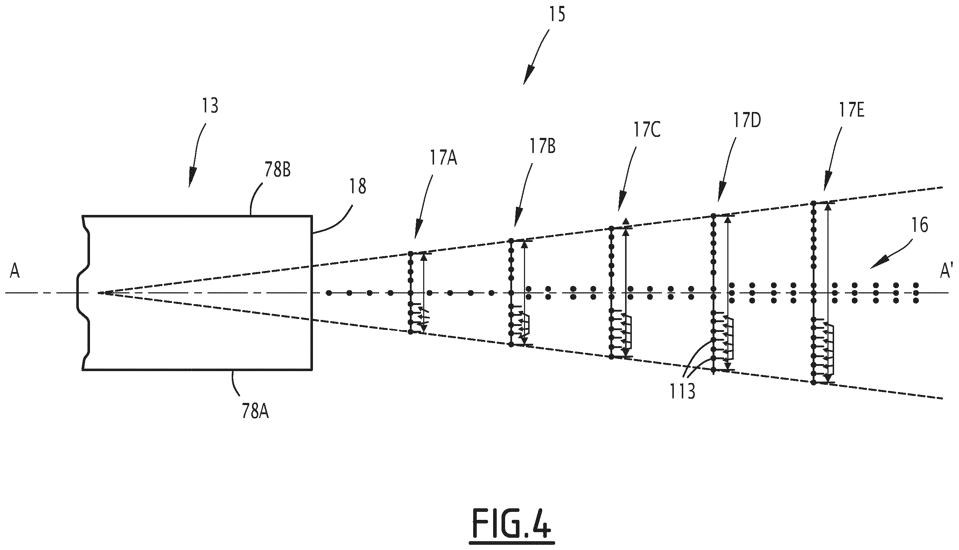

Le système de vision 10 est destiné à assister le pilote de l'aéronef 12 lors d'une phase d'approche, au voisinage d'une piste d'atterrissage 13, représentée schématiquement sur la figure 4.

En particulier, le système de vision 10 est destiné à aider le pilote dans le repérage visuel de la piste d'atterrissage 13 depuis le cockpit 14 pour prendre la décision de poser ou non l'aéronef 12 sur la piste d'atterrissage 13, en détectant la position de lampes d'une rampe lumineuse d'approche 15 vers la piste 13.

D'une manière générale, en référence à la figure 4, la rampe lumineuse d'approche 15 s'étend à l'avant de la piste d'atterrissage 13, dans l'axe A-A' de celle-ci.

Elle comporte au moins un alignement axial 16 de lampes matérialisant l'axe de piste A-A', et au moins une ligne transversale 17A à 17E de lampes, perpendiculaire à l'alignement axial 16, croisant l'alignement axial 16 et s'étendant de part et d'autre de l'alignement axial 16.

Généralement, l'alignement axial 16 s'étend depuis le seuil de piste 18, sur une distance axiale, prise à partir du seuil de piste 18, supérieure à 420 m (1400 pieds), et généralement comprise entre 420 m et 900 m (3500 pieds).

Les lignes transversales 17A à 17E sont espacées longitudinalement les unes des autres. De préférence, au moins une ligne transversale 17B s'étend transversalement à une distance comprise entre 274 m (900 pieds) et 335 m (1100 pieds) du seuil de piste 18, de préférence à 300 m (1000 pieds) du seuil de piste 18.

Dans l'exemple représenté sur la figure 4, la largeur de l'alignement axial 16, résultant du nombre de lampes qui le compose, diminue en se rapprochant du seuil de piste 18.

Les lignes transversales 17A à 17E sont espacées longitudinalement les unes des autres typiquement d'au moins 150 m (500 pieds). Dans l'exemple de la figure 4, la largeur des lignes transversales 17A à 17E diminue en se rapprochant du seuil de piste 18. La largeur de la ligne 17B est par exemple comprise entre 10 m (33 pieds) et 60 m (197 pieds), par exemple 30 m ou 60 m.

Dans une variante de rampe lumineuse d'approche 15, non représentée, la rampe 15 comporte une ligne transversale située au niveau du seuil de piste 18, et deux lignes longitudinales parallèles à l'alignement axial, raccordant les extrémités libres des lignes transversales entre elles, à gauche et à droite de l'alignement axial.

Dans une autre variante, non représentée, la rampe 15 comporte un alignement axial qui s'élargit en se rapprochant du seuil de piste 18. Elle comporte une ligne transversale située au niveau du seuil de piste 18, et une seule ligne transversale qui s'étend transversalement à une distance comprise entre 274 m (900 pieds) et 335 m (1100 pieds) du seuil de piste 18, de préférence à 300 m (1000 pieds) du seuil de piste 18. Elle ne comprend pas d'autres lignes transversales.

Plus généralement, la rampe d'approche 15 est d'un type standardisé, par exemple CALVERT CAT I ou CAT II, T-Bar, ALSF CAT I ou CAT II, MALSR, MALSF, SSALF, ou SSALR. Chacun de ces types de rampe d'approche 15 comprend des configurations de lampes caractéristiques du type de rampe d'approche 15, indépendamment du terrain sur lequel la rampe d'approche 15 est installée.

En référence à la figure 2, le cockpit 14 est muni d'un système principal d'affichage 22 raccordé à une unité centrale d'avionique 20.

Le système principal 22 permet à l'équipage de piloter l'aéronef 12, de gérer sa navigation, de surveiller et commander les différents systèmes fonctionnels présents dans l'aéronef 12. Le système 22 comporte une planche de bord munie d'un ou d'une pluralité d'écrans de base 24A à 24D formant des afficheurs tête basse.

Dans cet exemple, le cockpit 14 est aussi avantageusement muni d'au moins un écran semi-transparent tête haute 26, placé en regard du pare-brise, voire de deux écrans semi-transparent tête haute 26.

Le cockpit 14 est par ailleurs muni d'un organe de commande 28 du pilotage de l'aéronef, tel qu'une manette ou un manche.

De manière connue, le ou les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de génération d'affichage (non représenté) configuré pour afficher les différentes fenêtres présentes sur ces écrans 24A à 24D.

L'unité centrale d'avionique 20 est raccordée à un système 30 de capteurs de mesure de paramètres avion et de positionnement spatial de l'aéronef 12.

Le système 30 de capteurs de mesure comporte par exemple des capteurs de mesure de paramètres extérieurs à l'aéronef tel que la température, la pression ou la vitesse, des capteurs de mesure de paramètres interne à l'aéronef et à ses différents systèmes fonctionnels, et des capteurs de positionnement, tel que des capteurs de position géographique, notamment un capteur GPS, des capteurs de détermination de la pente de l'aéronef, notamment au moins une centrale inertielle, et un capteur de détermination d'une hauteur par rapport au sol, notamment un radio-altimètre.

Les capteurs du système de capteurs de mesure 30 sont propres à fournir une information sur la position géographique de l'aéronef 12, sur sa vitesse, son cap et son attitude (assiette longitudinale, angle de roulis).

En outre, le système de capteurs 30 comporte au moins un capteur électrooptique/infrarouge 32 par exemple disposé dans le nez de l'aéronef 12, comme décrit dans le brevet européen EP 2 716 548.

Le capteur électrooptique/infrarouge 32 comporte avantageusement une pluralité de détecteurs optiques, disposés par exemple côte à côte, les bandes de longueur d'onde pour lesquelles chaque détecteur est sensible pouvant varier d'un détecteur à l'autre.

Par « détecteur optique », on entend ici un détecteur apte à opérer à des longueurs d'ondes comprises généralement entre 0,3 µm et 15,0 µm pour former des images qui seront désignées par « images optiques ».

Ainsi, le capteur électrooptique/infrarouge 32 est configuré pour engendrer une image optique de l'espace situé à l'avant et en dessous de l'aéronef, à partir des données reçues du ou des détecteurs du capteur électro-optique/infrarouge 32, préférentiellement en fusionnant les données obtenues de chaque détecteur du capteur 32 au sein de la même image.

Le ou chaque détecteur du capteur électro-optique/infrarouge 32 est un détecteur passif. Le capteur électrooptique/infrarouge 32 est inapte à engendrer un signal destiné à être envoyé dans l'espace situé en regard et en dessous de l'aéronef 12, contrairement à un radar.

En référence à la figure 1, le système de vision améliorée 10 selon l'invention est raccordé au système 30 de mesure et de positionnement.

Le système de vision 10 comporte au moins un afficheur 36, et un générateur 38 d'affichage sur l'afficheur 36, raccordé à l'afficheur 36 et au système de capteurs de mesure 30. Le système de vision 10 comporte en outre une interface homme/machine 40.

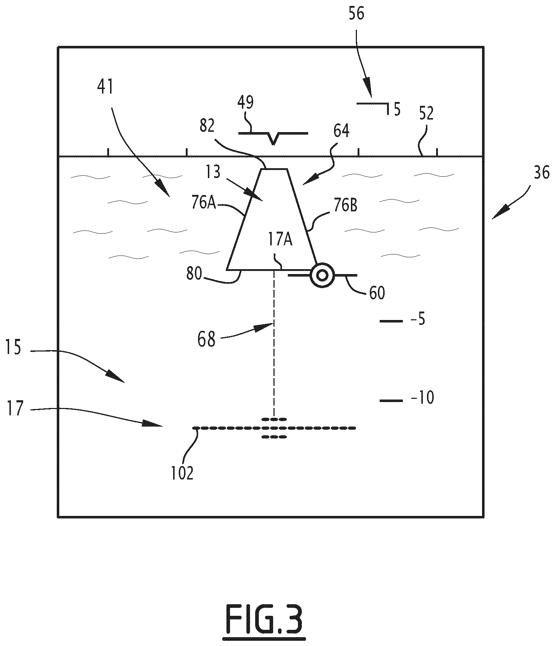

En référence à la figure 3, le générateur d'affichage 38 est configuré pour afficher sur l'afficheur 36 une représentation synthétique 41 de position d'une piste d'atterrissage 13 et/ou de la rampe d'approche 15 vers la piste d'atterrissage 13, à une position affichée sur l'afficheur 36. Cette position affichée de la représentation synthétique 41 correspond, en l'absence de dysfonctionnement, à la position réelle de vision de la piste d'atterrissage 13 et/ou la rampe d'approche 15 sur l'afficheur 36.

Ainsi, dans le cas où la piste d'atterrissage 13 et/ou la rampe d'approche 15 serait masquée, par exemple par une couche nuageuse, et donc invisible sur l'afficheur 36, la représentation synthétique 41 est positionnée à la position sur l'afficheur 36 où la piste d'atterrissage 13 et/ou la rampe d'approche 15 serait visible dans l'espace situé à l'avant de l'aéronef 12, en l'absence de couche nuageuse.

Selon l'invention, le système de vision 10 comporte en outre un système 43 de détection d'incohérence entre la position affichée de la représentation synthétique 41 et la position réelle de vision de la piste d'atterrissage 13 et/ou de la rampe d'approche 15 sur l'afficheur 36.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

L'afficheur 36 permet au pilote d'observer l'espace situé à l'avant de l'aéronef 12, par exemple par transparence ou par affichage d'une image optique de cet espace et simultanément, un affichage engendré par l'ensemble de génération d'affichage 38.

Dans un premier mode de réalisation, qui sera décrit par la suite, l'afficheur 36 du système de vision 10 selon l'invention est l'écran semi-transparent tête haute 26 du cockpit 14.

L'ensemble de génération d'affichage 38 comporte au moins un processeur 42 et au moins une mémoire 44 contenant une pluralité de modules logiciels propres à être exécutés par le processeur 42. Il comporte une base de données 46 de caractéristiques de pistes d'atterrissage, par exemple stockée dans la mémoire 44. En variante, il comporte des composants logiques programmables (« Field Programmable Gate Array » ou FPGA en anglais) ou des circuits intégrés dédiés destinés à réaliser les fonctions des modules qui seront décrits ci-après.

L'ensemble de génération d'affichage 38 comporte un module 48 de récupération des données des capteurs de mesure du système 30, en particulier, de la position géographique de l'aéronef 12 par rapport au sol.

En référence aux figures 1 et 3, l'ensemble de génération d'affichage 38 comporte un module 47 de génération d'un symbole 49 de maquette de l'aéronef, un module 50 de génération d'une ligne 52 d'horizon artificiel, et un module 54 associé de génération d'une échelle de pente 56.

L'ensemble de génération d'affichage 38 comprend également un module 58 de génération d'un symbole 60 de vecteur vitesse et des modules (non représentés) de génération d'autres symboles représentatifs de paramètres de vol, par exemple un indicateur d'altitude, des indicateurs de badin, de vitesse verticale, de vitesse sol d'information moteur, et de conformation de sustentation de l'aéronef.

L'ensemble de génération d'affichage 38 comprend en outre, un module 62 de génération d'un marquage 64 de localisation de la piste d'atterrissage 13, et un module 66 de génération d'un symbole 68 d'axe de piste, le marquage 64 et le symbole 68 étant propres à s'afficher en approche de la piste d'atterrissage 13, avantageusement une fois que la piste d'atterrissage 13 a été sélectionnée par le pilote.

Le module de génération 47 est configuré pour engendrer l'affichage d'un symbole 49 de maquette avion qui matérialise une projection à l'infini de l'axe longitudinal de l'aéronef 12, à partir des données reçues des capteurs du système de positionnement 30.

Le module de génération 50 est configuré pour déterminer, à partir des données reçues des capteurs du système de positionnement 30, la position d'une ligne d'horizon artificiel 52 par rapport à l'attitude courante de l'aéronef. Cette ligne d'horizon 52 est droite lorsque l'aéronef 12 évolue ailes à plat, et s'incline en fonction de l'angle de gîte de l'aéronef 12.

Le module 58 est configuré pour engendrer l'affichage d'un symbole de vecteur vitesse 60 indiquant la direction du vecteur vitesse de l'aéronef 12, sur la base des données reçues des capteurs du système de mesure 30. L'écart vertical entre la ligne d'horizon artificiel 52 et le symbole de vecteur vitesse 60 représente la pente sol de l'aéronef 12.

Le module de génération 54 est configuré pour afficher une échelle de pente 56 située de part et d'autre du symbole de vecteur vitesse 60 et matérialisée par des graduations illustrant des degrés de pente successifs.

Le module de génération 62 est configuré pour engendrer au moins un marquage de localisation de piste 64 matérialisant la position géographique de la piste d'atterrissage 13, lors d'une phase d'approche de l'atterrissage, lorsque la piste d'atterrissage 13 est susceptible d'être visible à l'avant de l'aéronef 12.

Cet affichage peut se faire lorsque le pilote a sélectionné la piste d'atterrissage visée. Il s'affiche par exemple lorsque l'aéronef 12 est à une hauteur inférieure à 365 m (1200 pieds) et se trouve à une distance inférieure à 9,3 km (5 miles nautiques) du seuil 18 de la piste d'atterrissage 13.

Le marquage de localisation de piste 64 comprend au moins deux symboles de localisation latérale gauche et droite 76A, 76B de la position de la piste d'atterrissage 13, dont la position est déterminée à partir des coordonnées géographiques de la piste 13 contenues dans la base de données 46 et de la position géographique de l'aéronef 12 par rapport au sol obtenue à partir des capteurs de mesure du système 30.

Ces symboles 76A, 76B sont par exemple deux lignes convergentes positionnées localement sur l'afficheur 36, pour correspondre à des lignes géographiques 78A, 78B parallèles à l'axe de la piste d'atterrissage 13 sur le sol (voir figure 4), situées le long des bords de la piste d'atterrissage 13 ou à une distance prédéfinie de ceux-ci, telles qu'obtenues à partir de la base de données 46.

La longueur des lignes géographiques 78A, 78B, et par suite, la longueur sur l'afficheur 36 des symboles 76A, 76B correspond à la longueur géographique de la piste d'atterrissage 13, tel qu'obtenue à partir de la base de données 46.

Éventuellement, le marquage de localisation de piste 64 comprend en outre un symbole 80 de localisation du seuil de piste et un symbole 82 de localisation de fin de piste, formés respectivement par des lignes raccordant les extrémités longitudinales des symboles 76A, 76B.

Le module de génération 66 est configuré pour afficher un symbole 68 illustrant la direction sur l'afficheur 36 de l'axe de piste A-A', par exemple une ligne pointillée, en dessous et à l'écart de la position correspondant au seuil de piste 18 sur l'afficheur 36.

En référence à la figure 1, le système de détection d'incohérence 43 comporte un processeur 90 et une mémoire 92 contenant des modules logiciels destinés à être exécutés par le processeur. En variante, il comporte des composants logiques programmables ou des circuits intégrés dédiés destinés à réaliser les fonctions des modules qui seront décrits ci-après.

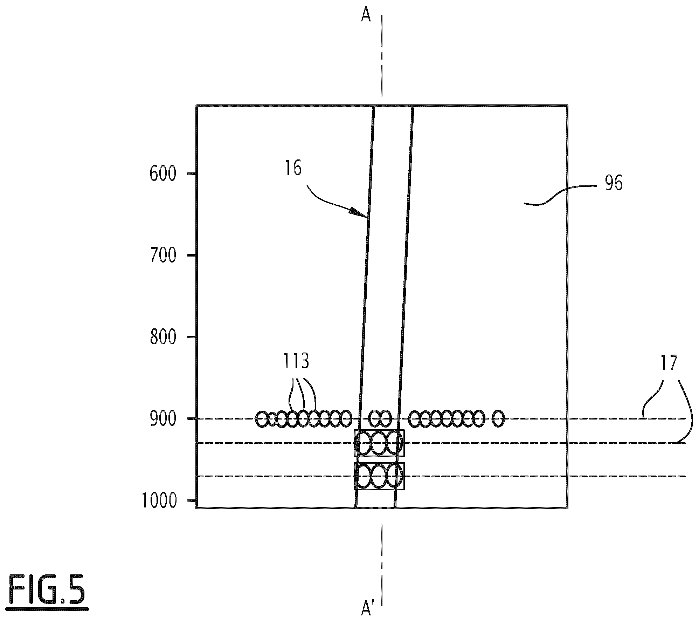

Le système de détection d'incohérence 43 comprend un module d'identification 94, dans une image optique 96 de l'espace situé à l'avant de l'aéronef 12 (visible notamment sur la figure 5), obtenue par le capteur électrooptique/infrarouge 32, d'au moins d'une ligne de lampes 17 s'étendant transversalement à un axe A-A' de la piste d'atterrissage 13.

Il comporte également un module d'identification 98, dans l'image optique 96, d'un alignement axial 16 de lampes s'étendant suivant l'axe A-A' de la piste d'atterrissage 13.

Le système de détection d'incohérence 43 comprend un système de caractérisation de la ligne de lampes 17 identifiée à partir du premier module d'identification 94 et/ou de l'alignement axial 16, configuré pour déterminer une position déterminée de la ligne de lampes 17 par rapport à la piste d'atterrissage 13 parmi une pluralité de positions possibles de lignes de lampes s'étendant transversalement à un axe A-A' de la piste d'atterrissage 13. Cette position est déterminée avantageusement sans avoir à identifier toutes les lignes de lampes à toutes les positions parmi la pluralité de positions possibles, ni sans disposer nécessairement d'une image complète de la rampe d'approche 15.

Dans cet exemple, le système de caractérisation comporte un module 100 de comptage de lampes 113, sur la ligne transversale de lampes 17, de part et d'autre de l'alignement 16, et dans l'alignement 16 pour définir au moins une signature ST, SA de la ligne transversale de lampes 17.

Le système de caractérisation comprend en outre une base 104 de signatures connues de référence STR, SAR et un module de comparaison 106 de la signature ST, SA de la ligne de lampes 17 définie par le module de comptage 100 avec des signatures connues de la base de signatures 104, pour identifier une signature connue STR, SAR correspondant à la ou à chaque signature ST, SA.

Comme on le verra plus bas, les signatures de référence STR, SAR sont avantageusement caractéristiques d'une configuration locale de lampes sur un type de rampe d'approche, et sont totalement indépendantes du type d'aéroport sur lequel la rampe d'approche est installée.

Le système de caractérisation comporte également un module de calcul 108 configuré pour calculer la position géographique de la ligne de lampes 17 par rapport à la piste d'atterrissage 13 utilisant la signature connue identifiée STR, SAR.

Le système de détection d'incohérence 43 comporte un module de calcul (qui peut être avantageusement le module de calcul 108) configuré pour calculer la position réelle de la piste d'atterrissage 13 et/ou de la rampe d'approche 15 sur l'afficheur 36 en utilisant la position de la ligne de lampes 17 calculée en utilisant la signature connue identifiée STR, SAR.

Le système de détection d'incohérence 43 comprend enfin un module 112 d'avertissement d'incohérence détectée, configuré pour générer un signal d'avertissement lorsque la différence de position sur l'afficheur 36 entre la position affichée de la représentation synthétique 41 et la position réelle sur l'afficheur 36 de la piste d'atterrissage 13 et/ou de la rampe d'approche 15 calculée par le module de calcul 108 est supérieure à un seuil donné.

Le module d'identification 94 est propre, en référence à la figure 5, à recevoir, à chaque instant, une image optique 96 de l'espace situé à l'avant de l'aéronef obtenue par le capteur électro-optique/infrarouge 32, puis à traiter cette image optique 96 pour obtenir, dans l'image optique 96, une détection des lampes d'approche 113 observées au niveau de la rampe d'approche 15, ou au niveau d'une barre de seuil de la piste d'atterrissage 13.

La détection des lampes d'approche 113 s'effectue par exemple par une estimation locale du bruit et du contraste, et par une comparaison du contraste par rapport au bruit et/ou par seuillage d'un niveau absolu.

Les lampes d'approche 113 sont identifiées comme dans l'image sous forme de symboles sensiblement circulaire.

Le module d'identification 94 est alors configuré pour déterminer, parmi les lampes d'approche 113 détectées dans l'image optique 96, celles qui constituent des lignes transversales 17 de lampes d'une rampe d'approche 15.

De même, le module d'identification 98 est configuré pour déterminer, parmi les lampes d'approche 113 détectées dans l'image optique 96, des alignements axiaux 16 s'étendant suivant l'axe A-A' de la piste d'atterrissage 13, ou parallèlement à celle-ci.

Cette identification est faite, indépendamment du nombre de lampes 113 présentes sur chaque ligne 17 ou sur chaque alignement 16, et même si certaines lampes 113 sont éteintes ou ne sont pas détectées.

La détection des lignes 17 et des alignements 16 tient compte éventuellement du roulis de l'aéronef 12, même si celui-ci n'est pas déterminé, en cherchant, sur l'image optique 96, les lignes horizontales ou sensiblement horizontales, avec une différence angulaire donnée par rapport à l'horizontale, ou les lignes verticales ou sensiblement verticales, avec une différence angulaire donnée par rapport à la verticale. La différence angulaire donnée correspond généralement au roulis maximal de l'avion, par exemple 10° pour les lignes horizontales et avantageusement jusqu'à 60° pour les lignes verticales, notamment pour les approches de biais par rapport à la piste.

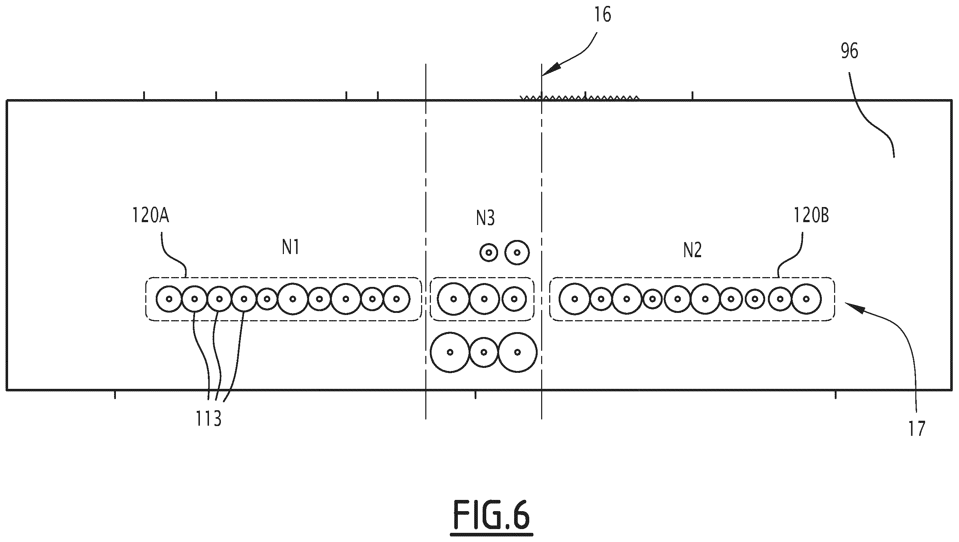

En référence à la figure 6, une fois l'alignement axial 16 et les lignes transversales 17 déterminées par les modules d'identification 94, 98, le module de comptage 100 est configuré pour compter les nombres N1, N2 de lampes 113 sur chaque ligne transversale 17 détectée par le module d'identification 94, de part et d'autre de l'alignement axial 16 déterminé par le module d'identification 98, ainsi que le nombre N3 de lampes sur la ligne 17 qui font partie de l'alignement axial 16.

Ainsi, sur chaque ligne transversale 17, le nombre N1 de lampes 113 dans un premier paquet latéral de lampes 120A, est compté d'un côté de l'alignement axial 16, et le nombre N2 de lampes 113 dans un deuxième paquet latéral 120B de lampes est compté de l'autre côté de l'alignement axial 16.

Par ailleurs, toujours sur chaque ligne transversale 17, le nombre N3 de lampes 113 dans un paquet axial de lampes 122 est compté dans l'alignement axial 16.

À partir du nombre N1 de lampes dans le premier paquet latéral 120A, du nombre N3 de lampes dans le paquet axial 122, et du nombre N2 de lampes dans le deuxième paquet latéral 120B, le module de comptage 100 est configuré pour définir une signature transversale ST de la ligne transversale de lampes 17 constituée par exemple de ces trois nombres [N1, N3, N2].

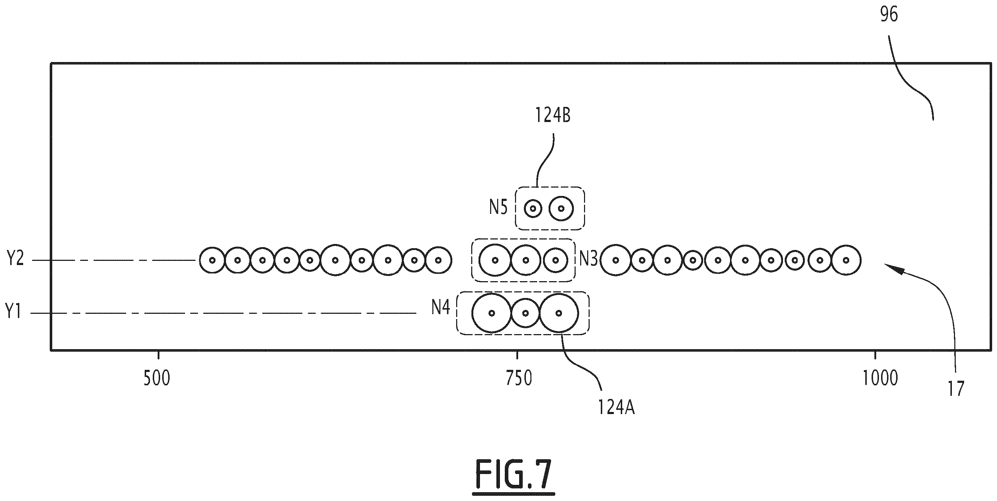

De même, comme illustré par la figure 7, le module de comptage 100 est configuré pour déterminer les nombres N4, N5 de lampes 113 sur des lignes transversales de lampes 17 situées à l'avant et à l'arrière de la ligne de lampes 17 respectivement dans un paquet amont 124A, et dans un paquet aval 124B.

À partir du nombre N4 de lampes 113 dans le paquet amont 124A, du nombre N3 de lampes 113 dans le paquet axial 122, et du nombre N5 de lampes dans le paquet aval 124B, le module de comptage 100 est configuré pour définir une signature axiale SA de la ligne transversale de lampes 17 constituée de ces trois nombres [N4, N3, N5].

La base de signatures 104 contient des signatures connues de référence STR, SAR correspondant à des lignes transversales 17 de lampes se retrouvant sur divers types de rampe d'approche connues, et non nécessairement à la piste d'atterrissage 13 sur laquelle l'aéronef 12 est destiné à atterrir.

Ainsi, dans l'exemple de la figure 3, pour une rampe de type CALVERT décrite sur cette figure, la base de signatures 104 comprend une signature transversale de référence STR, et une signature axiale de référence SAR correspondant à chaque ligne transversale 17A à 17E de la ligne de rampe.

Avantageusement, plusieurs signatures de référence STR, SAR sont associées à chaque ligne transversale 17A à 17E de la ligne de rampe pour tenir compte notamment d'éventuelles pannes de lampes ou plus généralement de l'inactivation d'au moins une lampe, voire des plusieurs lampes de la lignes transversale 17A à 17E.

Ainsi, dans l'exemple de la figure 6, la ligne de lampes 17 est associée à la signature normale [N1, N3, N2] lorsque toutes les lampes fonctionnent, mais également aux signatures [N1-1, N3, N2], [N1, N3-1, N2], [N1, N3, N2-1], [N1-1, N3-1, N2] etc., qui sont représentative de la non activation d'une ou plusieurs lampes de la ligne de lampes 17.

**Ainsi, un** catalogue de signatures de référence STR, SAR simples est défini dans la base de signatures 104, ces signatures de référence STR, SAR représentant des configurations de lignes de lampes distinctes et identifiables de manière non équivoques, correspondant chacune à un type de rampe d'approche 15. Ces signatures sont avantageusement cataloguées dans la base de signatures 104 sans avoir à identifier la piste d'atterrissage précise à l'avant de laquelle la rampe d'approche 15 est positionnée.

Ce catalogue de signatures peut être facilement enrichi par des règles simples et peu consommatrices en espace mémoire et en ressources de calcul rendant l'implémentation et l'utilisation de la base de signatures 104 compatible et robuste avec les calculateurs embarqués à bord d'un aéronef 12.

Pour un type de rampe d'approche 15 donnée, la position des lignes transversales 17A à 17E étant connue et éventuellement normalisée par rapport à un seuil de piste, chaque couple de signatures STR, SAR dans la base de signatures 104 est donc associé à une distance du seuil de piste ou à un nombre limité (généralement au plus deux) de distances possibles du seuil de piste. Dans ce dernier cas, chaque distance de la ligne transversale 17A à 17E au seuil de piste correspond à une distance interligne donnée entre deux lignes transversales 17A à 17E adjacentes.

Avantageusement, comme précisé ci-dessus, la base de signatures 104 n'établit pas nécessairement de lien direct entre un couple de signatures STR, SAR et une distance au seuil de piste sur chaque piste d'atterrissage 13 connue, mais simplement un lien entre un couple de signatures STR, SAR et une distance au seuil de piste d'une ligne transversale d'une ou plusieurs type de rampes d'approche 15 génériques.

En variante, lorsque la couleur des lampes peut également être déterminée par exemple par un détecteur « rouge vert bleu » (« Red Green Blue » ou RGB en anglais) ou par pesée des radiométries des différents détecteurs du capteur 32, une signature colorimétrique SCR est avantageusement associée à une ou plusieurs lampes de la ligne de lampes permettant d'affiner ou/et de supprimer des ambigüités entre des lignes transversales 17 de la même rampe 15 ou de rampes 15 de types différents.

Le module de comparaison 106 est propre, sur la base des signatures ST, SA identifiées de la ligne transversale de lampes 17, à comparer ces signatures ST, SA avec des signatures connues STR, SAR dans la base de signatures 104, pour identifier un couple de signatures connues STR, SAR correspondant aux signatures détectées ST, SA dans la base de signatures 104.

Avantageusement, pour positivement associer les signatures observées ST, SA aux signatures connues STR, SAR, le module de comparaison 106 est configuré pour vérifier à différents instants successifs que les signatures observées ST, SA aux différents instants successifs correspondent bien aux mêmes signatures connues STR, SAR sur plusieurs instants parmi les différents instants successifs. Une cohérence temporelle de la détection de la signature de référence STR, STA est ainsi obtenue, ce qui augmente la robustesse.

Si dans la base de données, le couple de signatures ST, SA est associé à une distance unique du seuil de la piste d'atterrissage 13, le module de calcul 108 de la position géographique de la ligne de lampes par rapport à la piste d'atterrissage 13 utilise la distance associée à la signature connue STR, SAR identifiée (par exemple 300 mètres) pour déterminer la distance géographique réelle entre la ligne de lampes 17 qui vient d'être détectée et identifiée et le seuil de la piste d'atterrissage 13.

Dans une variante, au moins deux distances possibles sont associées au couple de signatures connues STR, STA dans la base de signatures 104, par exemple parce que les lignes transversales de lampes 17 adjacentes sont potentiellement écartées soit d'une première distance, soit d'une deuxième distance (par exemple 30 mètres ou 60 mètres).

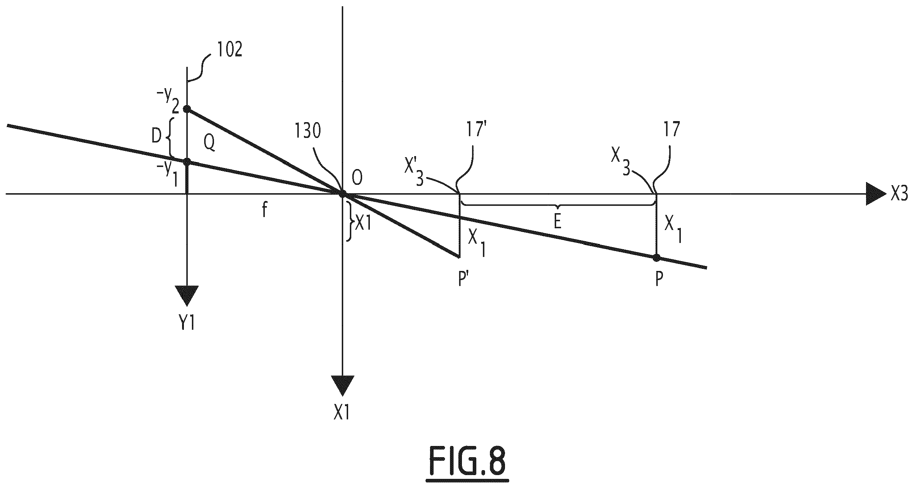

Dans ce cas, le module de calcul 108 de la position géographique est configuré pour considérer un écart supposé de distance réelle le long de l'axe A-A' entre la ligne transversale considérée 17, et au moins une lampe d'une ligne adjacente à la ligne transversale considérée 17, parmi au moins deux écarts supposés prédéterminés, puis à calculer une hauteur supposée de l'aéronef par rapport au sol en utilisant l'écart supposé, à l'aide d'un modèle optique de tête d'aiguille tel qu'illustré par la figure 8.

Dans ce modèle, le capteur électro-optique/infrarouge 32 est positionné au point 130, à une altitude X1 que le module de calcul 108 calcule.

Pour mettre en œuvre le calcul, l'écart E = X3 - X3' entre les lampes de la ligne transversale 17, et une lampe de la ligne adjacente 17' est supposé égal à un des écarts supposés.

Par ailleurs, la distance mesurée D= -Y1+Y2 entre la ligne transversale 17, et une lampe de la ligne adjacente 17' sur l'image optique 102 est également connu et la distance focale f entre l'objectif situé au point 130 et le plan de formation de l'image optique 102 est aussi connu. Le module de calcul 108 utilise alors un modèle de géométrie projective de type sténopé pour calculer la hauteur X1 de l'aéronef 12 par rapport au sol pour chaque écart supposé possible. La hauteur X1 est comparée à la hauteur mesurée par le système de capteurs 30.

L'écart supposé donnant l'altitude calculée la plus proche de l'altitude réelle de l'aéronef 12 est alors utilisé pour établir la position réelle de la ligne transversale 17 par rapport au seuil 18 de la piste 13.

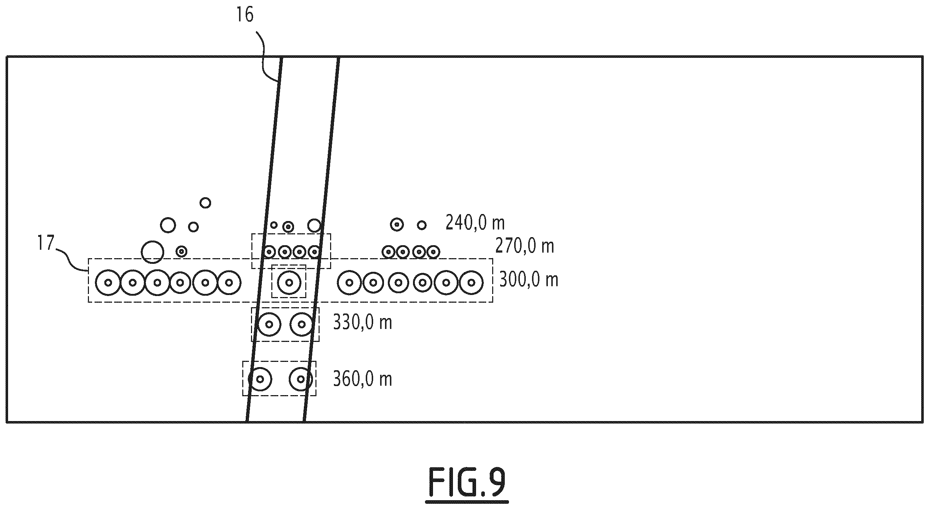

Une fois la distance au seuil de piste de la ligne transversale 17 calculée par le module de calcul 108, celle-ci peut être éventuellement affichée sur l'afficheur 36, comme illustré par la figure 9.

Ensuite, le module de calcul 108 est configuré pour calculer la position réelle sur l'afficheur 36 à laquelle la piste d'atterrissage 13 devrait se trouver, par exemple la position réelle sur l'afficheur 36 à laquelle devrait se trouver la barre de seuil 18, en fonction de la position réelle de la ligne de lampes 17 détectée.

Puis, le module d'avertissement d'incohérence 112 est configuré pour générer un signal d'avertissement, lorsque la différence entre la position affichée sur l'afficheur 36 de la représentation synthétique 41 de la piste d'atterrissage 13 et la position réelle sur l'afficheur 36 de la piste d'atterrissage 13 et/ou de la rampe d'approche 15 calculée par le module de calcul 108 est supérieure à un seuil donné, par exemple à un seuil défini en distance sur l'afficheur, ou en nombre de pixels.

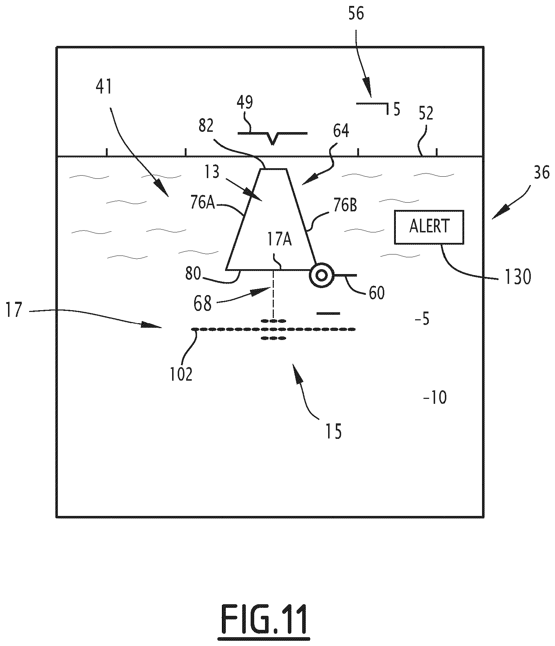

Le signal d'avertissement est par exemple transmis au générateur d'affichage 38, pour afficher une alerte visuelle 130 sur l'afficheur 36, comme illustré par la figure 11. En variante ou en complément, l'alerte est une alerte sonore, ou/et tactile.

Par ailleurs, sur réception du signal d'avertissement, le générateur d'affichage 36 est également configuré pour supprimer l'affichage de la représentation synthétique 41, ou au moins du marquage 64 de la piste d'atterrissage 13.

Le fonctionnement du système de vision 10 selon l'invention, lors de l'approche vers une piste d'atterrissage 13 va maintenant être décrit, en référence aux figures 2 à 10.

Initialement, l'aéronef 12 descend vers la piste d'atterrissage 13. Comme illustré par la figure 2, le module de génération 50 engendre l'affichage de la ligne d'horizon 52. Le module de génération 54 engendre l'affichage d'une échelle de pente 56 et le module de génération 58 engendre l'affichage d'un symbole de vecteur vitesse 60 dont la distance verticale à la ligne d'horizon 52 traduit la pente avion, sur l'échelle de pente 56.

A une distance donnée de la piste d'atterrissage 13, le pilote sélectionne la piste d'atterrissage 13 choisie. Lorsque la distance est inférieure à une distance d'affichage donnée, par exemple 19,2 km (10 miles nautiques) ou/et à une hauteur d'affichage donnée, par exemple 600 m (2000 pieds), le module de génération 62 active l'affichage du marquage de localisation de piste 64. Il interroge la base de données 46 pour déterminer la localisation géographique des lignes 78A, 78B et transcrit cette position géographique en une position correspondante sur l'afficheur 36 pour afficher les lignes latérales 76A, 76B.

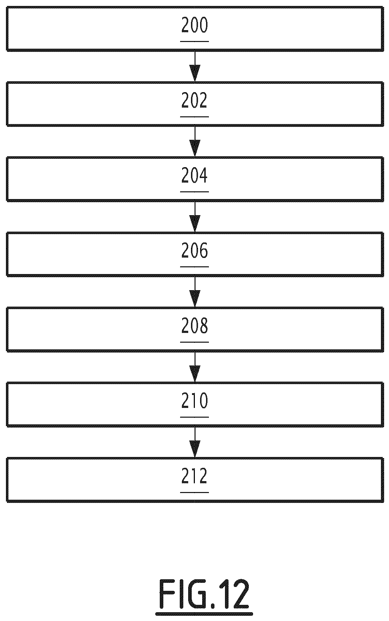

Le système de détection d'incohérence 43 s'active également suivant les étapes illustrées par la figure 12.

A l'étape 200, le module d'identification 94, en référence à la figure 5, reçoit à chaque instant, une image optique 96 de l'espace situé à l'avant de l'aéronef obtenue par le capteur électro-optique/infrarouge 32, et traite cette image optique 96 pour obtenir, dans l'image optique 96, une détection des lampes d'approche 113 observées au niveau de la rampe d'approche 15, ou au niveau d'une barre de seuil de la piste d'atterrissage 13.

A l'étape 202, le module d'identification 94 détermine, parmi les lampes d'approche 113 détectées dans l'image optique 96, celles qui constituent des lignes transversales 17 de lampes d'une rampe d'approche 15.

De même, le module d'identification 98 détermine, parmi les lampes d'approche 113 détectées dans l'image optique 96, des alignements axiaux 16 s'étendant suivant l'axe A-A' de la piste d'atterrissage 13, ou parallèlement à celle-ci.

A l'étape 204, en référence à la figure 6, une fois l'alignement axial 16 et les lignes transversales 17 déterminées par les modules d'identification 94, 98, le module de comptage 100 compte les nombres N1, N2 de lampes 113 sur chaque ligne transversale 17 détectée par le module d'identification 94, de part et d'autre de l'alignement axial 16 déterminé par le module d'identification 98, ainsi que le nombre N3 de lampes sur la ligne 17 qui font partie de l'alignement axial 16.

À partir du nombre N1 de lampes dans le premier paquet latéral 120A, du nombre N3 de lampes dans le paquet axial 122, et du nombre N2 de lampes dans le deuxième paquet latéral 120B, le module de comptage 100 définit une signature transversale ST de la ligne transversale de lampes 17 constituée par exemple de ces trois nombres [N1, N3, N2].

De même, comme illustré par la figure 7, le module de comptage 100 détermine les nombres N4, N5 de lampes 113 sur des lignes transversales de lampes 17 situées à l'avant et à l'arrière de la ligne de lampes 17 respectivement dans un paquet amont 124A, et dans un paquet aval 124B.

À partir du nombre N4 de lampes 113 dans le paquet amont 124A, du nombre N3 de lampes 113 dans le paquet axial 122, et du nombre N5 de lampes dans le paquet aval 124B, le module de comptage 100 définit une signature axiale SA de la ligne transversale de lampes 17 constituée de ces trois nombres [N4, N3, N5].

A l'étape 206, sur la base des signatures ST, SA identifiées, le module de comparaison 106 compare ces signatures ST, SA avec des signatures connues STR, SAR dans la base de signatures 104, et identifie un couple de signatures connues STR, SAR correspondant aux signatures détectées ST, SA dans la base de signatures 104.

A l'étape 208, si dans la base de données, le couple de signatures ST, SA est associé à une distance unique du seuil de la piste d'atterrissage 13, le module de calcul 108 de la position géographique de la ligne de lampes par rapport à la piste d'atterrissage 13 utilise la distance associée à la signature connue STR, SAR identifiée pour déterminer la distance géographique réelle entre la ligne de lampes 17 qui vient d'être détectée et identifiée et le seuil de la piste d'atterrissage 13.

Dans une variante, si au moins deux distances possibles sont associées au couple de signatures connues STR, STA dans la base de signatures 104, le module de calcul 108 de la position géographique considère un écart supposé de distance réelle le long de l'axe A-A' entre la ligne transversale considérée, et au moins une lampe d'une ligne adjacente à la ligne transversale considérée 17, parmi au moins deux écarts supposés prédéterminés, puis calcule une hauteur supposée de l'aéronef 12 par rapport au sol en utilisant l'écart supposé, à l'aide d'un modèle optique de tête d'aiguille tel que décrit plus haut.

L'écart supposé donnant l'altitude calculée la plus proche de l'altitude réelle de l'aéronef 12 est alors utilisé pour établir la position réelle de la ligne transversale 17 par rapport au seuil 18 de la piste 13.

Ensuite, à l'étape 210, le module de calcul 108 calcule la position réelle sur l'afficheur 36 à laquelle la piste d'atterrissage 13 devrait se trouver, par exemple la position réelle sur l'afficheur 36 à laquelle devrait se trouver la barre de seuil 18, en fonction de la position réelle de la ligne de lampes 17 détectée.

Puis, à l'étape 212, le module d'avertissement d'incohérence 112 génère un signal d'avertissement, lorsque la différence entre la position affichée sur l'afficheur 36 de la représentation synthétique 41 de la piste d'atterrissage 13 et la position réelle sur l'afficheur 36 de la piste d'atterrissage 13 et/ou de la rampe d'approche 15 calculée par le module de calcul 108 est supérieure à un seuil donné, par exemple à un seuil défini en distance sur l'afficheur 36, ou en nombre de pixels.

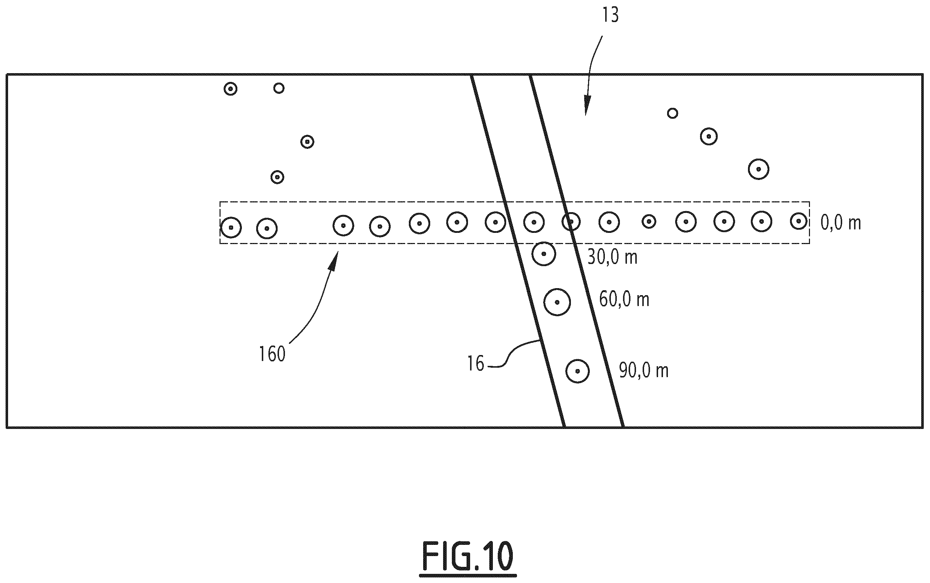

Dans une variante illustrée sur la figure 10, le système 43 de détection d'incohérence comporte également une base de données de signatures de barre de seuil 160, le module de comptage 100 étant configuré pour déterminer le nombre de lampes sur la barre de seuil 160, et dans l'alignement axial 16, au moins d'un côté de la barre de seuil 160.

Ainsi, le module de comparaison 106 est configuré pour détecter la position de la barre de seuil 160, et le module de calcul 108 est configuré pour comparer la position réelle de la barre de seuil sur l'afficheur 36 en utilisant la position calculée de la barre de seuil 160.

Avantageusement, le module de comparaison 106 est configuré pour déterminer si la barre de seuil 160 est une barre de seuil de piste ou une barre de seuil décalée à l'avant du seuil de piste, par exemple en fonction du nombre de lampes présentes dans la barre de seuil 160, de la signature transversale de la barre de seuil ou encore de la couleur des lampes détectées sur la barre de seuil.

Par exemple, si le nombre de lampes détecté sur une ligne transversale de lampes 17 est supérieur à une valeur donnée, par exemple supérieur à 20, le module de comparaison 106 est configuré pour déterminer qu'il s'agit bien d'une barre de seuil 160 et non d'une ligne transversale 17 de lampes de la rampe 15.

En outre, si la signature comprend des lampes d'une couleur déterminée par exemple des lampes rouges, le module de comparaison 106 est configuré pour discriminer entre une barre de seuil de piste et une barre de seuil décalée.

Par exemple le module de comparaison 106 détermine une ligne transversale et une lampe de couleur rouge, il identifie une fin de piste ou un seuil décalé. Au contraire, s'il détermine une ligne transversale et une lampe verte, il identifie un seuil de piste. S'il détermine une ligne transversale et une lampe blanche, il identifie une rampe d'approche.

Le module d'avertissement d'incohérence 112 est alors configuré pour détecter une incohérence entre la position affichée de la représentation synthétique 41 et la position réelle sur l'afficheur 36 de la barre de seuil 160.

Dans une autre variante, le module de calcul 108 est configuré pour calculer un angle de roulis de l'aéronef 12, sur la base d'une orientation axiale détectée de l'alignement 16 détecté par le module d'identification 98.

Dans une variante, l'afficheur 36 n'affiche pas nécessairement l'image 102 sur l'afficheur 36. Néanmoins, l'image 102 est traitée par le système de détection d'incohérence 43 pour détecter une incohérence sur le positionnement de la représentation synthétique 41, comme décrit précédemment.

Dans une variante, le module de comptage de lampes 100 comporte un moteur d'intelligence artificielle configuré pour déterminer, à partir d'une région de l'image optique 96 incluant la ligne transversale de lampes 17 sans inclure toutes les lignes de lampes de la rampe d'approche 15, une signature corrigée SA, ST de la lignes de lampes pour tenir compte notamment d'éventuelles pannes de lampes ou plus généralement de l'inactivation d'au moins une lampe, voire des plusieurs lampes de la ligne transversale de lampes 17.

Le moteur d'intelligence artificielle reçoit comme données d'entrée au moins les nombres N1, N2 de lampes 113 sur chaque ligne transversale 17 détectée par le module d'identification 94, de part et d'autre de l'alignement axial 16 déterminé par le module d'identification 98, ainsi que le nombre N3 de lampes sur la ligne 17 qui font partie de l'alignement axial 16, ainsi que la région de l'image optique. Le moteur d'intelligence artificielle produit comme donnée de sortie la ou les signatures corrigées SA, ST.

Il comporte par exemple un réseau de neurones comprenant avantageusement :
- des couches convolutionnelles avec différents étages de convolution-échantillonnage (en anglais « pooling ») et d'encodage,
- au moins un étage de projection avec concaténation des données aux données fournies en entrées ; et/ou
- des couches complètement connectées avantageusement de type perceptron pour produire les sorties attendues.

L'apprentissage du moteur d'intelligence artificielle est effectué en lui fournissant, comme données d'apprentissage, une pluralité d'images représentatives de régions situées autour de lignes transversales de lampes 17 de structures de rampes d'approche 15 diverses, avec d'éventuelles pannes de lampes ou plus généralement des inactivations d'au moins une lampe, et en lui fournissant, en correspondance à chaque image, la configuration du nombre de lampes détectées, et la ou les signatures corrigées correspondant à la ligne transversale de lampes 17 sur chaque image.

Dans une autre variante, le système de caractérisation de la ligne transversale de lampes 17 identifiée à partir du premier module d'identification 94 est dépourvu de module de comptage 100. Il comporte, en remplacement du module de comptage 100, un moteur d'intelligence artificielle configuré pour déterminer la position déterminée de la ligne de lampes par rapport à la piste d'atterrissage 13 parmi la pluralité de positions possibles de lignes de lampes s'étendant transversalement à un axe A-A' de la piste d'atterrissage 13.

Le moteur d'intelligence artificielle est configuré à déterminer la position de la ligne de lampes et éventuellement le type de rampe d'approche 15 à laquelle la ligne de lampes 17 appartient, à partir d'une analyse d'une région de l'image optique 96 comprenant la ligne transversale de lampes 17, sans inclure toutes les lignes transversales de lampes à toutes les positions parmi la pluralité de positions possibles.

Le moteur d'intelligence artificielle reçoit comme données d'entrée la région de l'image optique 96 contenant la ligne transversale de lampes 17, sans nécessairement contenir toutes les lignes transversales de lampes de la rampe d'approche 15. Il produit comme donnée de sortie la position de la ligne transversale de lampes 17 par rapport à la piste d'atterrissage 13 ou/et le type de rampe d'approche 15 auquel appartient la ligne transversale de lampes 17.

Il comporte par exemple un réseau de neurones convolutionnel, tel que décrit plus haut.

L'apprentissage du moteur d'intelligence artificielle est effectué en lui fournissant comme données d'apprentissage, une pluralité d'images représentatives de régions situées autour de lignes transversales de lampes de structures de rampes d'approche 15 diverses, avec d'éventuelles pannes de lampes ou plus généralement avec l'inactivation d'au moins une lampe, et en lui fournissant de manière correspondante pour chaque image, la position de la ligne transversale de rampes, et éventuellement, le type de rampe d'approche 15 auquel appartient la ligne transversale de lampes.

## Revendications

1. Système (10) de vision améliorée d'aéronef, comportant :
- un afficheur (36), destiné à visualiser l'espace situé à l'avant de l'aéronef (12) et un générateur d'affichage (38) sur l'afficheur (36), configuré pour afficher sur l'afficheur (36) une représentation synthétique (41) de positionnement d'une piste d'atterrissage (13) et/ou d'une rampe d'approche (15) vers la piste d'atterrissage (13) à une position affichée de la piste d'atterrissage (13) et/ou de la rampe d'approche (15),
- un système de détection d'incohérence (43) entre la position affichée de la représentation synthétique (41) et la position réelle de vision sur l'afficheur (36) de la piste d'atterrissage (13) et/ou de la rampe d'approche (15),
**caractérisé en ce que** le système de détection d'incohérence (43) comprend :
- un premier module d'identification (94), dans une image optique (96) de l'espace situé à l'avant de l'aéronef (12), d'au moins d'une ligne de lampes s'étendant transversalement à un axe (A-A') de la piste d'atterrissage (13) ;
- un système de caractérisation de la ligne de lampes identifiée à partir du premier module d'identification (94), le système de caractérisation étant configuré pour déterminer une position déterminée de la ligne de lampes par rapport à la piste d'atterrissage (13) parmi une pluralité de positions possibles de lignes de lampes s'étendant transversalement à un axe (A-A') de la piste d'atterrissage (13),
- un module de calcul (108) configuré pour calculer une position réelle de vision sur l'afficheur (36) de la piste d'atterrissage (13) et/ou de la rampe d'approche (15) en utilisant la position déterminée de la ligne de lampes.

2. Système (10) selon la revendication 1, dans lequel le système de caractérisation de la ligne de lampes comprend un module de comptage de lampes (100), sur la ligne de lampes pour définir au moins une signature (ST, SA) de la ligne de lampes ; et un module de comparaison (106) de la ou de chaque signature (ST, SA) de la ligne de lampes avec des signatures connues de lignes de lampes dans une base de données (104) de signatures connues de lignes de lampes, pour identifier au moins une signature connue (STR, STA) correspondant à la ou à chaque signature définie par le module de comptage de lampes (100), le système de caractérisation de la ligne de lampes étant configuré pour déterminer la position déterminée de la ligne de lampes en utilisant la ou chaque signature connue (STR, STA) identifiée par le module de comparaison (106).

3. Système (10) selon la revendication 2, dans lequel le module de comptage de lampes (100) est configuré pour définir au moins une signature transversale (ST) de la ligne de lampes.

4. Système (10) selon la revendication 3, dans lequel le système de détection d'incohérence (43) comporte un deuxième module d'identification (98), dans l'image optique (96), d'un alignement (16) de lampes s'étendant suivant l'axe (A-A') de la piste d'atterrissage (13), le module de comptage de lampes (100) étant configuré pour compter sur la ligne de lampes, le nombre de lampes de part et d'autre de l'alignement (16), et dans l'alignement (16) pour définir au moins une signature (ST, SA) de la ligne de lampes;

5. Système (10) selon la revendication 4, dans lequel la signature transversale (ST) comporte un nombre (N3) de lampes sur l'alignement (16) au niveau de la ligne de lampes, et des nombres (N1, N2) de lampes détectées de part et d'autre de l'alignement (16) sur la ligne de lampes.

6. Système (10) selon l'une quelconque des revendications 4 à 6, dans lequel le module de comptage de lampes (100) est configuré pour définir au moins une signature axiale (SA) de la ligne de lampes.

7. Système (10) selon la revendication 6, dans lequel la signature axiale comprend le nombre (N3) de lampes sur l'alignement (16) au niveau de la ligne de lampes et au moins un nombre de lampes (N4, N5) sur au moins une ligne de lampes adjacente axialement à la ligne de lampes.

8. Système (10) selon l'une quelconque des revendications 4 à 7, dans lequel le module de calcul (108) est configuré pour calculer un angle de roulis de l'aéronef (12), sur la base d'une orientation axiale détectée de l'alignement (16) détecté par le module d'identification (98) d'un alignement (16) de lampes s'étendant suivant l'axe (A-A') de la piste d'atterrissage (13).

9. Système (10) selon l'une quelconque des revendications 2 à 8, dans lequel le premier module d'identification (94) est configuré pour identifier une couleur ou/et une intermittence périodique d'allumage d'au moins une lampe de la ligne de lampes, la signature de la ligne de lampe comportant au moins la couleur et ou une caractéristique d'intermittence d'allumage d'au moins une lampe de la ligne de rampes.

10. Système (10) selon l'une quelconque des revendications 2 à 9, dans lequel la ligne de lampes est une ligne transversale (17) de rampe d'approche (15) vers la piste d'atterrissage (13), la base de données (104) étant une base de données de signatures de lignes transversales (17) de rampes d'approche (15) vers une piste d'atterrissage (13).

11. Système (10) selon l'une quelconque des revendications 2 à 10, dans lequel la ligne de lampes est une barre de seuil de piste (160), la base de données (104) étant une base de données de signatures de barres de seuil de piste.

12. Système (10) selon l'une quelconque des revendications 10 et 11, prises ensemble, dans lequel le module de comparaison (106) est configuré pour déterminer, à partir de la signature (SA, ST) de la ligne de lampes si la ligne de lampe est une ligne transversale (17) de rampe d'approche vers la piste d'atterrissage (13) ou si la ligne de lampes est une barre de seuil de piste, éventuellement décalée.

13. Système (10) selon la revendication 1, dans lequel le système de caractérisation de la ligne de lampes identifiée à partir du premier module d'identification (94) comporte un moteur d'intelligence artificielle configuré pour déterminer la position déterminée de la ligne de lampes par rapport à la piste d'atterrissage (13) parmi la pluralité de positions possibles de lignes de lampes s'étendant transversalement à un axe (A-A') de la piste d'atterrissage (13) à partir d'une analyse d'une région de l'image optique comprenant la ligne de lampes.

14. Système (10) selon l'une quelconque des revendications précédentes, dans lequel le module de calcul (108) est configuré pour déterminer une distance réelle entre la ligne de lampes et au moins une lampe adjacente à la ligne de lampes en utilisant la distance sur l'image optique (96) entre la ligne de lampes et la lampe adjacente, et une hauteur mesurée de l'aéronef (12) par rapport au sol.

15. Système (10) selon la revendication 14, dans lequel le module de calcul (108) est configuré pour supposer un écart prédéterminé de distance réelle entre la lampe adjacente à la ligne de lampes et la ligne de lampes, puis est configuré pour calculer une hauteur supposée de l'aéronef (12) par rapport au sol en utilisant l'écart supposé entre les lampes, et à comparer la hauteur supposée de l'aéronef (12) par rapport au sol avec la hauteur mesurée de l'aéronef (12) par rapport au sol.

16. Système (10) selon l'une quelconque des revendications précédentes, dans lequel le système de détection d'incohérence (43) comprend un module d'avertissement d'incohérence (112), configuré pour générer un signal d'avertissement lorsque la différence entre la position affichée sur l'afficheur (36) de la représentation synthétique (41) et la position réelle de vision sur l'afficheur (36) de la piste d'atterrissage et/ou de la rampe d'approche (15) calculée par le module de calcul (108) est supérieure à un seuil donné.

17. Procédé de vision améliorée mis en oeuvre dans un aéronef (12) muni d'un système de vision améliorée (10) selon l'une quelconque des revendications précédentes, le procédé comprenant les étapes suivantes :
- affichage sur l'afficheur (36) par le générateur d'affichage (38) d'une représentation synthétique (41) de positionnement d'une piste d'atterrissage (13) et/ou d'une rampe d'approche (15) vers la piste d'atterrissage (13) à une position affichée de la piste d'atterrissage (13) et/ou de la rampe d'approche (15) ;
- détection, par le système de détection d'incohérence (43) d'une incohérence entre la position affichée de la représentation synthétique (41) et la position réelle de vision sur l'afficheur (36) de la piste d'atterrissage (13) et/ou de la rampe d'approche (15) ; **caractérisé en ce que** la détection par le système de détection d'incohérence (43) comprend les étapes suivantes :
- identification, par le premier module d'identification (94), dans une image optique (96) de l'espace situé à l'avant de l'aéronef (12), d'au moins d'une ligne de lampes s'étendant transversalement à un axe (A-A') de la piste d'atterrissage (13) ;
- caractérisation, par le système de caractérisation, de la ligne de lampes identifiée à partir du premier module d'identification (94), pour déterminer une position déterminée de la ligne de lampes par rapport à la piste d'atterrissage (13) parmi une pluralité de positions possibles de lignes de lampes s'étendant transversalement à un axe (A-A') de la piste d'atterrissage (13),
- détermination, par le module de calcul (108), d'une position réelle de vision sur l'afficheur (36) de la piste d'atterrissage (13) et/ou de la rampe d'approche (15) en utilisant la position déterminée de la ligne de lampes.

18. Procédé selon la revendication 17, dans lequel la caractérisation de la ligne de lampes identifiée à partir du premier module d'identification (94) comporte le comptage de lampes sur la ligne de lampes, par un module de comptage de lampes (100) du système de caractérisation, pour définir au moins une signature (ST, SA) de la ligne de lampes et la comparaison par le module de comparaison (106) de la ou de chaque signature (ST, SA) de la ligne de lampes avec des signatures connues de lignes de lampes dans une base de données (104) de signatures connues de lignes de lampes, pour identifier au moins une signature connue (STR, STA) correspondant à la ou à chaque signature définie par le module de comptage de lampes (100); le procédé comprenant la détermination, par le système de caractérisation, d'une position déterminée de la ligne de lampes utilisant la ou chaque signature connue (STR, STA) identifiée par le module de comparaison (106).
